# EUROPÄISCHE PATENTSCHRIFT

(11) **EP 2 324 081 B1**
(45) Veröffentlichungstag und Bekanntmachung des Hinweises auf die Patenterteilung: **06.11.2013**
(21) Anmeldenummer: 09781130.1
(22) Anmeldetag: 27.07.2009
(51) Int. Cl.: C09B 67/20, C09D 5/00

(54) **WÄSSRIGE UNIVERSALPIGMENTPASTE**
AQUEOUS UNIVERSAL PIGMENT PASTE
PATE PIGMENTAIRE AQUEUSE UNIVERSELLE

(30) Priorität: 29.07.2008 EP 08161328
(43) Veröffentlichungstag der Anmeldung: 25.05.2011
(73) Patentinhaber: BASF SE, 67056 Ludwigshafen (DE)
(72) Erfinder: REISACHER, Hans Ulrich, 67133 Maxdorf (DE); MAUTHE, Uwe, 68239 Mannheim (DE)
(86) Internationale Anmeldenummer: PCT/EP2009/059669
(87) Internationale Veröffentlichungsnummer: WO 2010/012685

(56) Entgegenhaltungen:
- EP-A1- 0 717 085
- WO-A2-2005/078023
- WO-A2-2007/005808
- DE-A1- 10 227 657
- US-A- 4 725 317
- US-B1- 6 287 377

## Beschreibung

Die vorliegende Erfindung betrifft eine wässrige pastöse Pigmentzusammensetzung, deren Herstellung sowie Verwendung.

Pigmentzubereitungen werden häufig dazu verwendet, flüssige Systeme wie Anstrichmittel, Lacke, Dispersions- und Druckfarben zu pigmentieren.

Hierbei ist es vorteilhaft, wenn die wässrige Pigmentzusammensetzung möglichst universell in Bezug auf das flüssige System einsetzbar ist. Dies erfordert insbesondere eine Suspendierbarkeit in Farben mit wässrigen sowie organischen Lösemitteln, die Grundlage der flüssigen Systeme darstellen. Bei den organischen Lösemitteln ist weiterhin zu unterscheiden, ob diese im Wesentlichen aromatischer oder aliphatischer Natur sind.

Hierbei ist insbesondere wichtig, dass die Pigmentzusammensetzungen einen möglichst geringen Anteil an flüchtigen organischen Stoffen aufweisen um auch wässrige Farben mit sehr niedrigen VOC-Gehalten herstellen zu können.

Die EP,A1,0,717,085 beschreibt Pigmentenpräparationen für wässrige Beschichtungsmittel enthaltend Phosphorsäuremonoester.

Universalfarbstoffzusammensetzungen sind beispielsweise in WO-A 2006/102 011 beschrieben.

Universalpräparationen auf Basis von Alkylpolyglykosiden werden in US-A 5 340 394 offenbart.

Universalpigmentpräparationen enthaltend Polyalkylenoxide sowie nicht-hydrierte Keton-Aldehydharze sind in DE-A 10 2006 026759 beschrieben.

Eine Zusammensetzung aus Pigment sowie ein Harz, das sowohl in Wasser als auch in organischen Lösemitteln löslich ist, wird in WO-A 03/057783 beschrieben.

Weitere universell einsetzbare Pigmentdispersionen sind in US-A 5,934,513, US-B 6,287,377 sowie US-B 6,488,760 beschrieben.

Trotz der im Stand der Technik bekannten universellen Zusammensetzungen besteht nach wie vor ein Bedarf an alternativen Zusammensetzungen, die insbesondere durch ihre Fließ- und Pumpfähigkeit, Koloristik sowie Viskosität insbesondere nach Einbringen in flüssige Systeme wie Farben oder Holzlasuren und insbesondere für wässrige und organische, wie aromatische und aliphatische, flüssige Systeme geeignet sind.

Eine Aufgabe der vorliegenden Anmeldung liegt somit in der Bereitstellung solcher Zusammensetzungen.

Die Aufgabe wird gelöst durch eine wässrige Pigmentzusammensetzung enthaltend jeweils auf das Gesamtgewicht der Zusammensetzung bezogen
(A) 10 Gew.-% bis 70 Gew.-% einer farbgebenden Komponente enthaltend mindestens ein Farbpigment und gegebenenfalls mindestens einen Füllstoff;
(B) 0,1 Gew.-% bis 30 Gew.-% einer oberflächenaktiven Additivkomponente auf Basis zumindest eines Phosphorsäure- oder Phosphonsäureesters, die sowohl anionisch als auch nichtionisch sein können;
(C) 0,1 Gew.-% bis 10 Gew.-% einer nichtionischen oberflächenaktiven Additivkomponente auf Basis zumindest eines hydroxylgruppenhaltigen Acetylens oder Acetylenalkoxylates;
(D) 0 Gew.-% bis 20 Gew.-% einer Additivkomponente enthaltend Additive verschieden von (B) und (C);
(E) 1 Gew.-% bis 89,8 Gew.-% einer Lösemittelkomponente zumindest Wasser enthaltend, wobei die Zusammensetzung als Paste vorliegt.

Es hat sich gezeigt, dass wässrige Pigmentzusammensetzungen in der vorliegenden Erfindung insbesondere durch die Komponenten (B) und (C) universell geeignete Pigmentzusammensetzungen darstellen, die insbesondere in wässrige und nicht-wässrige Systeme eingebracht werden können.

Die Komponente (A) der erfindungsgemäßen wässrigen Pigmentzusammensetzung enthält mindestens ein Pigment. Darüber hinaus kann Komponente (A) auch mindestens einen Füllstoff enthalten. Füllstoffe werden häufig bei Zusammensetzungen mit niedrigeren Pigmentgehalten eingesetzt, um Lagerstabilitäten und Viskositäten einzustellen. Es können selbstverständlich mehrere Pigmente und/oder mehrere verschiedene Füllstoffe in der Komponente (A) enthalten sein.

Vorzugsweise enthält die Komponente A 5 Gew.% bis 100 Gew.-% bezogen auf Komponente A mindestens ein Pigment (A1) und 0 Gew.-% bis 95 Gew.% bezogen auf die Komponente A mindestens eines keine Eigenfarbe aufweisenden Füllstoffes (A2).

Vorzugsweise beträgt der Anteil (A1) bezogen auf Komponente (A) 10 Gew.-% bis 100 Gew.-%.

Der Anteil der Komponente (A) bezogen auf das Gesamtgewicht der erfindungsgemäßen wässrigen Pigmentzusammensetzung beträgt 10 Gew.% bis 70 Gew.-%. Vorzugsweise beträgt dieser Anteil 10 Gew.-% bis 60 Gew.-%.

Als Pigment(e) können anorganische oder organische Pigmente enthalten sein. Selbstverständlich kann die farbgebende Komponente auch Mischungen verschiedener anorganischer oder verschiedener organischer Pigmente oder Mischungen von anorganischen und organischen Pigmenten enthalten.

Die Pigmente liegen typischerweise in feinteiliger Form vor. Die Pigmente haben dementsprechend üblicherweise mittlere Teilchengrößen von 0,01 bis 5 µm.

Als anorganische Pigmente können Bunt-, Schwarz- und Weißpigmente (Farbpigmente) sowie Glanzpigmente eingesetzt werden. Typische organische Pigmente sind Bunt- und Schwarzpigmente.

Geeignete organische Pigmente sind z.B.:
- - Monoazopigmente:: C.I. Pigment Brown 25;
C.I. Pigment Orange 5, 13, 36, 38, 64 und 67;
C.I. Pigment Red 1, 2, 3, 4, 5, 8, 9, 12, 17, 22, 23, 31, 48:1, 48:2, 48:3, 48:4, 49, 49:1, 51:1, 52:1, 52:2, 53, 53:1, 53:3, 57:1, 58:2, 58:4, 63, 112, 146, 148, 170, 175, 184, 185, 187, 191:1, 208, 210, 245, 247 und 251;
C.I. Pigment Yellow 1, 3, 62, 65, 73, 74, 97, 120, 151, 154, 168, 181, 183 und 191;
C.I. Pigment Violet 32;
- - Disazopigmente:: C.I. Pigment Orange 16, 34, 44 und 72;
C.I. Pigment Yellow 12, 13, 14, 16, 17, 81, 83, 106, 113, 126, 127, 155, 174, 176, 180 und 188;
- - Disazokondensationspigmente:: C.I. Pigment Yellow 93, 95 und 128;
C.I. Pigment Red 144, 166, 214, 220, 221, 242 und 262;
C.I. Pigment Brown 23 und 41;
- - Anthanthronpigmente:: C.I. Pigment Red 168;
- - Anthrachinonpigmente:: C.I. Pigment Yellow 147, 177 und 199;
C.I. Pigment Violet 31;
- - Anthrapyrimidinpigmente:: C.I. Pigment Yellow 108;
- - Chinacridonpigmente:: C.I. Pigment Orange 48 und 49;
C.I. Pigment Red 122, 202, 206 und 209;
C.I. Pigment Violet 19;
- - Chinophthalonpigmente:: C.I. Pigment Yellow 138;
- - Diketopyrrolopyrrolpigmente:: C.I. Pigment Orange 71, 73 und 81;
C.I. Pigment Red 254, 255, 264, 270 und 272;
- - Dioxazinpigmente:: C.I. Pigment Violet 23 und 37;
C.I. Pigment Blue 80;
- - Flavanthronpigmente:: C.I. Pigment Yellow 24;
- - Indanthronpigmente:: C.I. Pigment Blue 60 und 64;
- - Isoindolinpigmente:: C.I. Pigmente Orange 61 und 69;
C.I. Pigment Red 260;
C.I. Pigment Yellow 139 und 185;
- - Isoindolinonpigmente:: C.I. Pigment Yellow 109, 110 und 173;
- - Isoviolanthronpigmente:: C.I. Pigment Violet 31;
- - Metallkomplexpigmente:: C.I. Pigment Red 257;
C.I. Pigment Yellow 117, 129, 150, 153 und 177;
C.I. Pigment Green 8;
- - Perinonpigmente:: C.I. Pigment Orange 43;
C.I. Pigment Red 194;
- - Perylenpigmente:: C.I. Pigment Black 31 und 32;
C.I. Pigment Red 123, 149, 178, 179, 190 und 224;
C.I. Pigment Violet 29;
- - Phthalocyaninpigmente:: C.I. Pigment Blue 15, 15:1, 15:2,15:3, 15:4, 15:6 und 16;
C.I. Pigment Green 7 und 36;
- - Pyranthronpigmente:: C.I. Pigment Orange 51;
C.I. Pigment Red 216;
- - Pyrazolochinazolonpigmente:: C.I. Pigment Orange 67;
C.I. Pigment Red 251;
- - Thioindigopigmente:: C.I. Pigment Red 88 und 181;
C.I. Pigment Violet 38;
- - Triarylcarboniumpigmente:: C.I. Pigment Blue 1, 61 und 62;
C.I. Pigment Green 1;
C.I. Pigment Red 81, 81:1 und 169;
C.I. Pigment Violet 1, 2, 3 und 27;

- C.I. Pigment Black 1 (Anilinschwarz);
- C.I. Pigment Yellow 101 (Aldazingelb);
- C.I. Pigment Brown 22.

Beispiele für geeignete anorganische Pigmente sind:
- - Weißpigmente:: Titandioxid (C.I. Pigment White 6), Zinkweiß, Farbenzinkoxid; Zinksulfid, Lithopone;
- - Schwarzpigmente:: Eisenoxidschwarz (C.I. Pigment Black 11), Eisen-ManganSchwarz, Spinellschwarz (C.I. Pigment Black 27); Ruß (C.I. Pigment Black 7);
- - Buntpigmente:: Chromoxid, Chromoxidhydratgrün; Chromgrün (C.I. Pigment Green 48); Cobaltgrün (C.I. Pigment Green 50); Ultramaringrün; Kobaltblau (C.I. Pigment Blue 28 und 36; C.I. Pigment Blue 72); Ultramarinblau; Manganblau;
Ultramarinviolett; Kobalt- und Manganviolett;
Eisenoxidrot (C.I. Pigment Red 101); Cadmiumsulfoselenid (C.I. Pigment Red 108); Cersulfid (C.I. Pigment Red 265); Molybdatrot (C.I. Pigment Red 104); Ultramarinrot;
Eisenoxidbraun (C.I. Pigment Brown 6 und 7), Mischbraun, Spinell- und Korundphasen (C.I. Pigment Brown 29, 31, 33, 34, 35, 37, 39 und 40), Chromtitangelb (C.I. Pigment Brown 24), Chromorange;
Cersulfid (C.I. Pigment Orange 75);
Eisenoxidgelb (C.I. Pigment Yellow 42); Nickeltitangelb (C.I. Pigment Yellow 53; C.I. Pigment Yellow 157, 158, 159, 160, 161, 162, 163, 164 und 189); Chromtitangelb; Spinellphasen (C.I. Pigment Yellow 119); Cadmiumsulfid und Cadmiumzinksulfid (C.I. Pigment Yellow 37 und 35); Chromgelb (C.I. Pigment Yellow 34); Bismutvanadat (C.I. Pigment Yellow 184).

Bei den Glanzpigmenten handelt es sich um einphasig oder mehrphasig aufgebaute plättchenförmige Pigmente, deren Farbenspiel durch das Zusammenspiel von Interferenz-, Reflexions- und Absorptionsphänomenen geprägt ist. Als Beispiele seien Aluminiumplättchen und ein- oder mehrfach, insbesondere mit Metalloxiden beschichtete Aluminium-, Eisenoxid- und Glimmerplättchen genannt.

Weiterhin kann die farbgebende Komponente mindestens einen Füllstoff (A2) enthalten.

Vorzugsweise handelt es sich bei dem mindestens einen Füllstoff um einen farblosen oder weißen Füllstoff.

Diese farblosen oder weißen Füllstoffe weisen in der Regel einen Brechungsindex ≤ 1,7 auf. Beispielsweise beträgt der Brechungsindex von Kreide 1,55, von Baryt 1,64, von Kaolin 1,56, von Talk 1,57, von Glimmer 1,58 und von Silikaten 1,55.

Die Füllstoffe sind üblicherweise im Anwendungsmedium unlöslich und stammen insbesondere aus den folgenden chemischen Klassen, wobei sowohl Produkte natürlicher Herkunft als auch Produkte synthetischer Herkunft beispielhaft aufgeführt werden:
- Oxide und Hydroxide:
   natürlich: Aluminiumoxid und Magnesiumoxid;
   synthetisch: Aluminiumhydroxid und Magnesiumhydroxid;
- Siliciumdioxid und Silikate:
   natürlich: Quarz, Christobalit, Kieselgur, Talk, Kaolin, Kieselerde, Glimmer, Wolastonit und Feldspat;
   synthetisch: pyrogene Kieselsäure, Fällungskieselsäure, Alumosilikate und calcinierte Alumosilikate;
- Carbonate:
   natürlich: Calcium- und Magnesiumcarbonate, wie Calcit, Kreide, Dolomit und Magnesit;
   synthetisch: gefälltes Calciumcarbonat;
- Sulfate:
   natürlich: Barium- und Calciumsulfate, wie Baryt und Gips;
   synthetisch: gefälltes Bariumsulfat.

Die Füllstoffe können die unterschiedlichsten Teilchenformen aufweisen. Beispielsweise kann es sich um Kugeln, Würfel, Plättchen oder Fasern handeln. Füllstoffe auf natürlicher Basis haben üblicherweise Teilchengrößen im Bereich von etwa 1 bis 300 µm. So weisen Handelsprodukte auf Basis natürlicher Kreide z.B. einen d₅₀-Wert von in der Regel 1 bis 160 µm auf. Teilchengrößen unter 1 µm liegen in der Regel nur bei synthetisch insbesondere durch Fällverfahren hergestellten Füllstoffen vor.

Bevorzugte Füllstoffe sind Carbonate und Sulfate, wobei natürliche und gefällte Kreide sowie Bariumsulfat besonders bevorzugt sind. Diese Produkte sind im Handel z.B. unter den Namen Omyacarb^{®} und Omyalite^{®} (Fa. Omya) und Blanc fixe (Fa. Sachtleben) erhältlich. Weitere bevorzugte Füllstoffe sind natürliche Silikate wie Kaolin, Talkum unter dem Namen Finntalc^{®} (Fa. Mondo Minerals Oy).

Vorzugsweise enthält die Komponente (A) mindestens ein anorganisches Pigment, beispielsweise transparentes Eisenoxidpigment oder Ruß.

Die nachfolgend aufgeführten Pigmentderivate eignen sich besonders als Pigmentsynergisten, die mit einem oder mehreren Pigmenten, insbesondere organischen Pigmenten, das Pigmentsystem (A1) bilden können.

In einer bevorzugten Ausführungsform enthält die Komponente (A) neben mindestens einem Pigment weiterhin mindestens einen Pigmentsynergisten. Dessen Anteil am Gesamtgewicht der erfindungsgemäßen Zusammensetzung beträgt vorzugsweise 0,01 Gew.% bis 2 Gew.-%, weiter bevorzugt 0,1 Gew.% bis 1 Gew.-%.

Es handelt sich hierbei um Pigmentderivate der Formel I 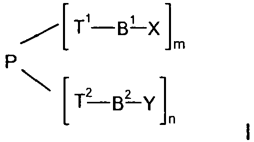 in der die Variablen folgende Bedeutung haben:
- P: den Rest des Grundkörpers eines organischen Pigments ;
- T1, T2: unabhängig voneinander eine chemische Bindung, -CONR1- oder -S02NR1-;
- B1, B2: unabhängig voneinander eine chemische Bindung, C1-C8-Alkylen oder Phenylen ;
- X, Y: unabhängig voneinander gleiche oder verschiedene Gruppen -S03- Ka+ oder -COO- Ka+ ;
- m, n: eine rationale Zahl von 0 bis 3, wobei 1 ≤ m+n ≤ 4 ist;
- Ka+: H+, Li+, Na+, K+, N+R2R3R4R5 oder ein Gemisch dieser Kationen;
- R1: Wasserstoff ; C1-C4-Alkyl; Phenyl oder Naphthyl, das jeweils durch C1-C18-Alkyl substituiert sein kann;
- R2 , R3, R4, R5: unabhängig voneinander Wasserstoff ; C1-C30-Alkyl; C3-C30-Alkenyl; C5-C6-Cycloalkyl, das durch C1-C24-Alkyl substituiert sein kann; Phenyl oder Naphthyl, das jeweils durch C1-C24-Alkyl oder C2-C24-Alkenyl substituiert sein kann; einen Rest der Formel -[CHR6-CHR7-O]x-R8, bei dem die Wiederholungseinheiten -[CHR6-CHR7-O] für x > 1 variieren können;
- R6, R7, R8: unabhängig voneinander Wasserstoff oder C1-C6-Alkyl;
- X: eine ganze Zahl ≥ 1.

Die Pigmentderivate I basieren auf dem Grundkörper P eines organischen Pigments, der durch Sulfonsäure- und/oder Carbonsäuregruppen funktionalisiert ist, die entweder direkt oder über Brückenglieder an den Grundkörper gebunden sind. Unter dem Begriff Grundkörper sollen dabei die Pigmente selbst sowie ihre Vorläufer verstanden werden. Pigmentvorläufer kommen insbesondere bei polycyclischen Pigmenten in Betracht. Sie weisen das Ringgerüst des Pigments auf, das Substitutionsmuster des Pigments liegt aber nicht vollständig vor und/oder Funktionalisierungen fehlen. Als Beispiel seien Perylen-3,4-dicarbonsäureimide als Vorläufer der auf Perylen-3,4,9,10-tetracarbonsäuren und deren Diimiden basierenden Perylenpigmente genannt.

Grundsätzlich sind für die Pigmentderivate I die Grundkörper von Pigmenten aus der Reihe der Anthrachinon-, Chinacridon-, Chinophthalon-, Diketopyrrolopyrrol-, Dioxazin-, Flavanthron-, Indanthron-, Isoindolin-, Isoindolinon-, Isoviolanthron-, Perinon-, Perylen-, Phthalocyanin-, Pyranthron-, Pyrazolochinazolon-und Thioindigopigmente bevorzugt. Aufgrund ihrer breiten Einsatzbarkeit sind dabei Pigmentgrundkörper aus der Reihe der Chinophthalon-, Perylen- und Phthalocyaninpigmente besonders bevorzugt. Unter diesen sind wiederum die Pigmentgrundkörper aus der Reihe der Chinophthalon-und Phthalocyaninpigmente ganz besonders bevorzugt. Die chinophthalonbasierenden Pigmentderivate I (insbesondere das im folgenden näher bezeichnete Pigmentderivat Ia) eignen sich besonders für die Kombination mit Gelb-, O-range- und Rotpigmenten, die phthalocyaninbasierenden Pigmentderivate I (vor allem das im folgenden ebenfalls näher bezeichnete Pigmentderivat Ib) sind insbesondere für die Kombination mit Blau-, Grün-, Violett- und Schwarzpigmenten geeignet.

Vorzugsweise enthalten die Pigmentderivate I die Sulfonsäure- und/oder Carbonsäuregruppen X bzw. Y direkt an den Pigmentgrundkörper P gebunden, d. h. T¹ und B¹ sowie T² und B² bedeuten alle bevorzugt eine chemische Bindung.

T¹ und T² können jedoch auch Brückenglieder der Formel-CONR¹-oder-SO₂NR¹ - (R¹: Wasserstoff; C₁-C₄-Alkyl; Naphthyl oder insbesondere Phenyl, das jeweils durch C₁-C₁₈-Alkyl substituiert sein kann, vorzugsweise aber unsubstituiert ist) bedeuten. Beispiele für besonders geeignete Brückenglieder T¹ und T² sind -CONH-, SO₂NH-, -CON (CH₃)- und -SO₂N(CH₃)-.

Ebenso können B¹ und B² unverzweigte oder verzweigte C₁-C₈-Alkylenreste oder Phenylenreste bedeuten. Beispielhaft seien genannt: Methylen, 1,1-und 1,2-Ethylen, 1,1-, 1, 2- und 1,3-Propylen und 1,4-, 1,3-und 1,2-Phenylen.

Geeignete Kombinationen der Brückenglieder T und B sind z. B. -CONH-CH₂-, -CON (CH₃)-CH₂-, -CONH-C₂H₄-, -CONH-CH(CH₃)-, -SO₂NH-CH₂-, -SO₂N(CH₃)-CH₂-,-SO₂NH-C₂H₄-, - SO₂NH-CH (CH₃)-, -CONH-1, 4-C₆H₄- und -SO₂NH-1, 4-C₆H₄-.

Die Sulfonsäure- und/oder Carbonsäuregruppen X bzw. Y können als freie Säure oder als Salz (Ka⁺: Li⁺, Na⁺, K⁺ oder N⁺R²R³R⁴R⁵) vorliegen.

Die Ammoniumsalze können dabei von unsubstituierten Ammoniumionen gebildet werden, vorzugsweise ist jedoch mindestens einer der Reste R², R³, R⁴ und R⁵ von Wasserstoff verschieden.

Geeignete aliphatische Reste R², R³, R⁴ und R⁵ sind dabei C₁-C₃₀-Alkyl-und C₃-C₃₀-Alkenylreste, die unverzweigt oder verzweigt sein können, und C₅-C₆-Cycloalkylreste, die durch C₁-C₂₄-Alkyl, vorzugsweise C₁-C₁₈-Alkyl, substituiert sein können. Als aromatische Reste eignen sich Phenyl und Naphthyl, die jeweils durch C₁-C₂₄-Alkyl oder durch C₂-C₂₄-Alkenyl, insbesondere C₁-C₁₈-Alkyl oder C₂-C₁₈-Alkenyl, substituiert sein können. Weiterhin können die Reste R², R³, R⁴ und R⁵ auch Polyalkylenoxyreste der Formel -[CHR⁶-CHR⁷-O]ₓR⁸ (R⁶, R⁷ und R⁸: unabhängig voneinander Wasserstoff, C₁-C₆-Alkyl; x ≥ 1) sein. Wenn x > 1 ist, kann es sich um homopolymere Reste, also z. B. reine Polyethylenoxy- oder reine Polypropylenoxyreste, oder um copolymere, die verschiedenen Alkylenoxyeinheiten insbesondere blockweise oder auch statistisch enthaltende Reste, z. B. Polyethylenoxy/Polypropylenoxyreste, handeln.

Bevorzugt sind die aromatischen und besonders bevorzugt die nichtcyclischen aliphatischen Reste R², R³, R⁴ und R⁵.

Ganz besonders geeignete Ammoniumsalze sind Mono-C₈-C₃₀-alkyl- oder -alkenylammoniumsalze, z. B. Lauryl-, Stearyl-, Oleyl- und Talgfettalkylammoniumsalze, sowie quaternierte Ammoniumsalze, die insgesamt 24 bis 42 C-Atome enthalten, wobei mindestens ein, bevorzugt zwei der Alkyl- und/oder Alkenylreste mindestens 8, vorzugsweise 12, besonders bevorzugt 12 bis 20 C-Atome aufweisen, z. B. Dimethyldidodecyl-, Dimethyldioleyl- und Dimethyldistearyl-ammoniumsalze.

Vorzugsweise liegen die Sulfonsäure- und/oder Carbonsäuregruppen X bzw. Y in den Pigmentderivaten I nicht in freier Form vor. Wenn sie nicht schon von vornherein zum Salz umgesetzt sind, erfolgt die Salzbildung, insbesondere die Bildung des Natriumsalzes, in der Regel bei der Herstellung der Pigmentzusammensetzung, die in diesem Fall vorzugsweise einen Neutralisationsschritt umfasst. Hat keine oder nur unvollständige Salzbildung stattgefunden, so können die Säuregruppen bei Einsatz eines nichtionischen oberflächenaktiven Additivs, das ein basisches Zentrum, z. B. ein Stickstoffatom, aufweist, selbstverständlich auch mit diesem Additiv unter Salzbildung reagieren.

Häufig werden also Mischungen verschiedener Salze vorliegen. Wenn dies der Fall ist, sollten die bevorzugten Natrium- und/oder Ammoniumsalze (insbesondere die oben explizit genannten Ammoniumsalze) zumindest einen hohen Anteil an diesen Mischungen ausmachen.

Die Pigmentderivate I können 1 bis 4 Säuregruppen enthalten. Abhängig vom Pigmentgrundkörper P, z. B. bei einem Phthalocyaninrest P, können die Pigmentderivate I statistische Mischungen verschieden stark substituierter Moleküle darstellen, so dass der Mittelwert der Summe m + n eine gebrochene Zahl sein kann.

Vorzugsweise enthalten die Pigmentderivate I ausschließlich Sulfonsäuregruppen. Dabei hat sich ein Substitutionsgrad (m + n) von 1 bis 3, vor allem 1 bis 2, als besonders vorteilhaft erwiesen. Liegen die Sulfonsäuregruppen in Form eines Ammoniumsalzes (m) und gegebenen- falls Natriumsalzes oder als freie Säure (n) vor, so beträgt m vorzugsweise 1 bis 1,8 und n 0 bis 0,2.

Als Beispiele für besonders geeignete Pigmentderivate I seien genannt:

Chinophthalonsutfonsäuren der Formel la

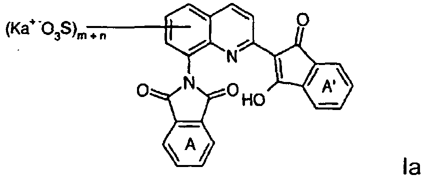

Kupferphthalocyaninsulfonsäuren der Formel Ib

[CuPc⁆ (SO₃Ka⁺)ₘ₊ₙ Ib

Perylensulfonsäuren der Formel Ic

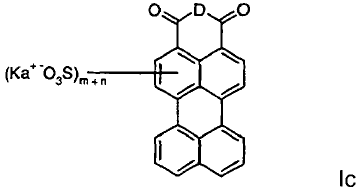

Die Variablen Ka⁺ und m + n haben dabei die eingangs definierte Bedeutung, wobei Ka vorzugsweise für Na⁺ oder N⁺R²R³R⁴R⁵ (insbesondere mit den oben ausgeführten bevorzugten Kombinationen der Reste R² bis R⁵) steht. Die Summe m + n bedeutet bei den Verbindungen la und Ic insbesondere 1, wobei die Sulfonsäuregruppen bei den Verbindungen la bevorzugt in 6- Position und bei den Verbindungen Ic bevorzugt in 9-Position steht.

Die Ringe A und A' in Formel la können gleich oder verschieden sein und durch jeweils 1 bis 4 Chlor- und/oder Fluoratome substituiert sein. Vorzugsweise tragen beide Ringe 4 Chloratome.

Die Variable D steht für -O- oder -NR⁹-, wobei R⁹ Wasserstoff, C₁-C₄-Alkyl oder Phenyl, das durch C₁-C₄-Alkyl, C₁-C₄-Alkoxy und/oder Phenylazo substituiert sein kann, bedeutet. Bevorzugt steht R⁹ für Wasserstoff, Methyl, 4-Ethoxyphenyl, 3,5-Dimethylphenyl oder 4-Phenylazophenyl.

Ganz besonders bevorzugte Pigmentderivate la und Ib sind solche mit den als bevorzugt angegebenen Bedeutungen der Variablen, wobei die Pigmentderivate la vorzugsweise als Natriumsalze vorliegen und die Pigmentderivate Ib sowohl als Natrium- als auch als Ammoniumsalze vorliegen können.

Als weiter organische Pigmentgrundkörper kommen Azo, Diketopyrrolopyrrol, Metallkomplexe, Chinacridone, Isoindolin und Isoindolinone in Frage.

Die Pigmentderivate I sind bekannt und können nach bekannten Verfahren hergestellt werden.

Neben der Komponenten (A) enthält die erfindungsgemäße wässrige Pigmentzusammensetzung eine Komponente (B), welche eine anionische oder nichtionische oberflächenaktive Additivkomponente darstellt, die auf zumindest einem Phosphorsäure- oder Phosphonsäureester basiert.

Die Komponente kann eine oder mehrere dieser Ester enthalten.

Der Anteil bezogen auf das Gesamtgewicht der Zusammensetzung der Komponente (B) beträgt 0,1 Gew.-% bis 30 Gew.-%. Vorzugsweise beträgt der Anteil 5 Gew.-% bis 20 Gew.-%.

Hierbei ist es besonders bevorzugt, wenn die Komponente (B) mindestens einen Phosphorsäureester enthält.

Wasserlösliche anionische/nichtionische oberflächenaktive Additive auf der Basis von Phosphorsäure- oder Phosphonsäureestern resultieren insbesondere aus den Umsetzungsprodukten von Polyethern mit Phosphorsäure, Phosphorpentoxid oder Phosphonsäure. Hierbei werden die Polyether in die entsprechenden Phosphorsäuremono-, -diester oder -triester bzw. entsprechender Phosphonsäureester überführt. Die anionischen Ester liegen bevorzugt in Form wasserlöslicher Salze, insbesondere als Alkalimetallsalze, vor allem Natriumsalze, und Ammoniumsalze vor, sie können jedoch auch in Form der freien Säuren eingesetzt werden.

Bevorzugte Phosphate und Phosphonate leiten sich vor allem von alkoxylierten, insbe-sondere ethoxylierten, Fett- und Oxoalkoholen, Alkylphenolen, Fettaminen, Fettsäuren und Harzsäuren und Aminen, auch mehrwertigen Aminen, wie Hexamethylendiamin ab.

Derartige anionische oberflächenaktive Additive sind bekannt und im Handel z.B. unter den Namen Crodafos^{®} (Croda), Rhodafac^{®} (Rhodia), Maphos^{®} (BASF), Texapon^{®} (Cognis), Empicol^{®} (Albright & Wilson), Matexil^{®} (ICI), Soprophor^{®} (Rhodia) und Lutensit^{®} (BASF), Strodex (Dexter), Hostphat^{®} (Clariant) erhältlich.

Darüber hinaus sind besonders bevorzugt Lecithine Bestandteil der Komponenten (B).

Besonders bevorzugt enthält Komponente (B) Sojalecithin. Lecithine sind Phospholipide, die sich aus Fettsäuren, Glycerin, Phosphorsäure und Cholin zusammensetzen. Hierbei können die Fettsäuren gesättigt oder ungesättigt sein.

Weiterhin enthält die erfindungsgemäße wässrige Pigmentzusammensetzung als Komponente (C) eine nicht-ionische oberflächenaktive Additivkomponente auf Basis zumindest eines hydroxylgruppenhaltigen Acetylens oder Acetylenalkoxylates. Die Komponente (C) kann eines oder mehrerer dieser oberflächenaktiven Additive enthalten.

Der Anteil der Komponente (C) in der erfindungsgemäßen wässrigen Pigmentzusammensetzung bezogen auf das Gesamtgewicht der Zusammensetzung beträgt 0,1 Gew.-% bis 10 Gew.-%. Vorzugsweise beträgt dieser Anteil 0,1 Gew.-% bis 5 Gew.-%.

Bei dem hydroxylgruppenhaltigen Acetylen handelt es sich um ein Acetylen, vorzugsweise mit 2 bis 100 Kohlenstoffatomen und mindestens einer Dreifachbindung, welches darüber hinaus mindestens eine Hydroxylgruppe trägt. Neben Acetylen selbst kann auch ein Acetylenalkoxylat eingesetzt werden. Dieses Acetylenalkoxylat leitet sich von dem hydroxylgruppenhaltigen Acetylen ab und weist darüber hinaus eine oder mehrere Alkoxylatketten auf, welche verschieden lang sein können und verschiedene Alkoxylate wie Ethoxylate, Propoxylate, Butoxylate enthalten können. Darüber hinaus enthält auch das Acetylenalkoxylat eine Hydroxylgruppe, die typischerweise die endständigen Hydroxylgruppen der Alkoxylatketten darstellen. Die Hydroxylgruppe oder - gruppen können jedoch auch weiterhin direkt an die Acetylen-Kohlenwasserstoffkette gebunden sein.

Vorzugsweise enthält die Komponente (C) mindestens ein Acetylendiol bzw. ein Acetylenalkoxylatdiol.

Solche Diolverbindungen sind vorzugsweise folgende der allgemeinen Formel (I). 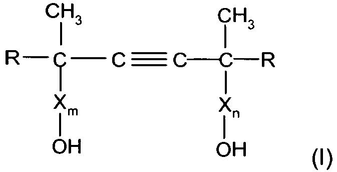 worin
jedes R unabhängig ein C₁-C₁₂-Alkyl- oder Alkylenrest, der verzweigt oder unverzweigt sein kann, ist;
jedes X unabhängig ausgewählt ist aus der Gruppe bestehend aus Ethoxy, Propoxy und Butoxy;
m + n die Anzahl von Molen der Ethoxy-, Propoxy- oder Butoxygruppen ist und im Bereich von 0 bis 50 liegt.

Vorzugsweise ist jedes R unabhängig voneinander ein verzweigter oder unverzweigter C₁-C₆ Alkyl- oder Alkylenrest und jedes X ist vorzugsweise eine Ethoxygruppe und m + n ist von 1 bis 30, vorzugsweise von 10 bis 30.

Weiterhin bevorzugt ist m + n = 0.

Besonders vorteilhaft sind Acetylendiolderivate der folgenden Formel (II): 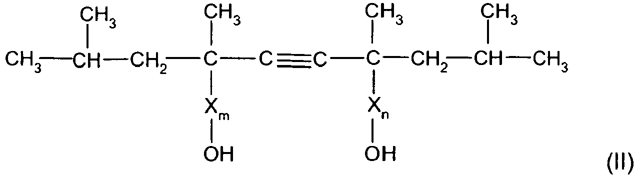 wobei
jedes X ausgewählt ist aus Ethoxy, Propoxy und Butoxy, vorzugsweise Ethoxyreste;
und m + n im Bereich von 0 bis 30, vorzugsweise von 10 bis 30 liegt.

Beispielhaft sind bevorzugte kommerziell erhältliche oberflächenaktive Acetylenderivate, welche unter dem Markennamen Surfynol (Air Products, Inc., Allentown, US) bekannt sind. Beispiele hierfür sind Surfynol 104, welches als 2,4,7,9-Tetramethyl-5-Decin-4,7-diol bezeichnet wird (in der obigen Formel m + n = 0). Lösungen dieser Diole sind in verschiedenen Lösemitteln erhältlich und werden unter den Markennamen Surfynol 104A, Surfynol 104E, Surfynol 104H und 104BC vertrieben. Ebenfalls gebräuchlich sind Mischungen von Acetylendiolen, welche ebenfalls von der Firma Air Products wie Surfynol GA, SE, TG und PC erhältlich sind. Weiterhin sind verwendbar Surfynol 61, welches als Dimethylhexindiol (R = CH₃) sowie als Surfynol 82, beschrieben als Dimethyl-octindiol (R = CH₂CH₃) verwendet werden. Insbesondere können ethoxylierte Derivate von Tetramethyldecindiol eingesetzt werden, welche erhältlich sind unter dem Markennamen Surfynol 440, Surfynol 465, Surfynol 485 und Surfynol 2502. Insbesondere Surfynol 465 ist beschrieben als ein Reaktionsprodukt von etwa 10 Mol Ethylenoxid (m + n = 10) mit einem Mol Tetramethyldecindiol. Surfynol 485 ist beschrieben als Reaktionsprodukt von etwa 30 Mol Ethylenoxid, so dass jedes X eine Ethoxygruppe darstellt und m + n = 30 ist, mit einem Mol Tetramethyldecindiol.

Weitere ethoxylierte Acetylendiolderivate sind von Air Products unter dem Markennamen Dynol (z.B. Dynol 604) bekannt.

Weiterhin kann die erfindungsgemäße wässrige Pigmentzusammensetzung eine Additivkomponente (D) enthalten, welche Additive enthält, die verschieden von (B) und (C) sind. Die Additivkomponente kann eine oder mehrere unterschiedlichste Additive enthalten. Vorzugsweise enthält die Zusammensetzung weitere von (B) und (C) verschiedene oberflächenaktive Additive.

Der Anteil dieser Additivkomponente, sofern sie vorhanden ist, beträgt bis zu 20 Gew.-%, vorzugsweise 0,1 Gew.-% bis 20 Gew.-%. Insbesondere beträgt der Anteil 0,1 Gew.-% bis 10 Gew.-%. Die Anteile der Komponenten (D) beziehen sich auf das Gesamtgewicht der Zusammensetzung. Die Komponente (D) kann auch nicht in der erfindungsgemäßen Zusammensetzung enthalten sein.

Solche Additive können beispielsweise Polyether sein.

Besonders geeignete nichtionische Additive basieren auf Polyethern. Diese nachfolgend näher beschriebenen Polyether können auch als Ausgangsverbindungen der oben beschriebenen Additive (B) dienen.

Neben den ungemischten Polyalkylenoxiden, bevorzugt C₂-C₄-Alkylenoxiden und phenylsubstituierten C₂-C₄-Alkylenoxiden, insbesondere Polyethylenoxiden, Polypropylenoxiden und Poly(phenylethylenoxiden), sind hier vor allem Blockcopolymerisate, insbesondere Polypropylenoxid- und Polyethylenoxidblöcke oder Poly(phenylethylenoxid)- und Polyethylenoxidblöcke aufweisende Polymerisate, und auch statistische Copolymerisate dieser Alkylenoxide geeignet.

Diese Polyalkylenoxide können durch Polyaddition der Alkylenoxide an Startermoleküle, wie gesättigte oder ungesättigte aliphatische und aromatische Alkohole, gesättigte oder ungesättigte aliphatische und aromatische Amine, gesättigte oder ungesättigte aliphatische Carbonsäuren und Carbonsäureamide sowie aromatische Carbonsäureamide und Sulfonsäureamide, hergestellt werden. Die aromatischen Startermoleküle können dabei durch C₁-C₂₀-Alkyl oder C₇-C₃₀-Aralkyl substituiert sein. Üblicherweise werden 1 bis 300 mol, bevorzugt 3 bis 150 mol, Alkylenoxid je mol Startermolekül eingesetzt, im Fall aromatischer Startermoleküle liegen die Alkylenoxidmengen vor allem bei 2 bis 100 mol, vorzugsweise bei 5 bis 50 mol und insbesondere bei 10 bis 30 mol. Die Polyadditionsprodukte können eine terminale OH-Gruppe aufweisen oder endgruppenverschlossen sein, z.B. als C₁-C₆-Alkylether vorliegen.

Geeignete aliphatische Alkohole enthalten dabei in der Regel 6 bis 26 C-Atome, bevorzugt 8 bis 18 C-Atome, und können unverzweigt, verzweigt oder cyclisch aufgebaut sein. Als Beispiele seien Octanol, Nonanol, Decanol, Isodecanol, Undecanol, Dodecanol, 2-Butyloctanol, Tridecanol, Isotridecanol, Tetradecanol, Pentadecanol, Hexadecanol (Cetylalkohol), 2-Hexyldecanol, Heptadecanol, Octadecanol (Stearylalkohol), 2-Heptylundecanol, 2-Octyldecanol, 2-Nonyltridecanol, 2-Decyltetradecanol, Oleylalkohol und 9-Octadecenol sowie auch Mischungen dieser Alkohole, wie C₈/C₁₀-, C₁₃/C₁₅- und C₁₆/C₁₈-Alkohole, und Cyclopentanol und Cyclohexanol genannt. Von besonderem Interesse sind die gesättigten und ungesättigten Fettalkohole, die durch Fettspaltung und Reduktion aus natürlichen Rohstoffen gewonnen werden, und die synthetischen Fettalkohole aus der Oxosynthese. Die Alkylenoxidaddukte an diese Alkohole weisen üblicherweise mittlere Molekulargewichte Mₙ von 200 bis 5 000 auf.

Als Beispiele für aromatische Alkohole seien neben unsubstituiertem Phenol und α-und β-Naphthol auch die alkylsubstituierten Produkte, die insbesondere durch C₁-C₁₂-Alkyl, vorzugsweise C₄-C₁₂- bzw. C₁-C₄-Alkyl, substituiert sind, und die aralkylsubstituierten Produkte, insbesondere C₇-C₃₀-aralkylsubstituiertes Phenol, wie Hexylphenol, Heptylphenol, Octylphenol, Nonylphenol, Isononylphenol, Undecyl-phenol, Dodecylphenol, Di- und Tributylphenol und Dinonylphenol, sowie Bisphenol A und seine Umsetzungsprodukte mit Styrol, vor allem in den ortho-Positionen zu beiden OH-Gruppen durch insgesamt 4 Phenyl-1-ethylreste substituiertes Bisphenol A, genannt.

Geeignete aliphatische Amine entsprechen den oben aufgeführten aliphatischen Alkoholen. Besondere Bedeutung haben auch hier die gesättigten und ungesättigten Fettamine, die vorzugsweise 14 bis 20 C-Atome aufweisen. Als aromatische Amine seien beispielsweise Anilin und seine Derivate genannt.

Als aliphatische Carbonsäuren eignen sich insbesondere gesättigte und ungesättigte Fettsäuren, die bevorzugt 14 bis 20 C-Atome enthalten, und hydrierte, teilhydrierte und unhydrierte Harzsäuren sowie auch mehrwertige Carbonsäuren, z.B. Dicarbonsäuren, wie Maleinsäure.

Geeignete Carbonsäureamide leiten sich von diesen Carbonsäuren ab.

Neben den Alkylenoxidaddukten an die einwertigen Amine und Alkohole sind die Alkylenoxidaddukte an mindestens bifunktionelle Amine und Alkohole von ganz besonderem Interesse.

Als mindestens bifunktionelle Amine sind zwei- bis fünfwertige Amine bevorzugt, die insbesondere der Formel H₂N-(R¹-NR²)ₙ-H (R¹: C₂-C₆-Alkylen; R²: Wasserstoff oder C₁-C₆-Alkyl; n: 1 bis 5) entsprechen. Im Einzelnen seien beispielhaft genannt: Ethylendiamin, Diethylentriamin, Triethylentetramin, Tetraethylenpentamin, Propylendiamin-1,3, Dipropylentriamin, 3-Amino-1-ethylenaminopropan, Hexamethylendiamin, Dihexamethylentriamin, 1,6-Bis-(3-aminopropylamino)hexan und N-Methyldipropylentriamin, wobei Hexamethylendiamin und Diethylentriamin besonders bevorzugt sind und Ethylendiamin ganz besonders bevorzugt ist.

Vorzugsweise werden diese Amine zunächst mit Propylenoxid und anschließend mit Ethylenoxid umgesetzt. Der Gehalt der Blockcopolymerisate an Ethylenoxid liegt üblicherweise bei etwa 10 bis 90 Gew.-%.

Die Blockcopolymerisate auf Basis mehrwertiger Amine weisen in der Regel mittlere Molekulargewichte Mₙ von 1 000 bis 40 000, vorzugsweise 1 500 bis 30 000, auf.

Als mindestens bifunktionelle Alkohole sind zwei- bis fünfwertige Alkohole bevorzugt. Beispielsweise seien C₂-C₆-Alkylenglykole und die entsprechenden Di- und Polyalkylenglykole, wie Ethylenglykol, Propylenglykol-1,2 und -1,3, Butylenglykol-1,2 und -1,4, Hexylenglykol-1,6, Dipropylenglykol und Polyethylenglykol, Glycerin und Pentaerythrit genannt, wobei Ethylenglykol und Polyethylenglykol besonders bevorzugt und Propylenglykol und Dipropylenglykol ganz besonders bevorzugt sind.

Besonders bevorzugte Alkylenoxidaddukte an mindestens bifunktionelle Alkohole weisen einen zentralen Polypropylenoxidblock auf, gehen also von einem Propylenglykol oder Polypropylenglykol aus, das zunächst mit weiterem Propylenoxid und dann mit Ethylenoxid umgesetzt wird. Der Gehalt der Blockcopolymerisate an Ethylenoxid liegt üblicherweise bei 10 bis 90 Gew.-%.

Die Blockcopolymerisate auf Basis mehrwertiger Alkohole weisen im allgemeinen mittlere Molekulargewichte Mₙ von 1 000 bis 20 000, vorzugsweise 1 000 bis 15 000, auf.

Derartige nichtionische oberflächenaktive Additive sind bekannt und im Handel z.B. unter den Namen Tetronic^{®}, Pluronic^{®} und Pluriol^{®} Lutensol (BASF), Atlas^{®}, Symperonic, (Uniquema), Emulgator WN und 386 (Lanxess) sowie Rhodasurf, Soprophor^{®} (Rhodia), Genopol (Clariant), Dowfax (Dow), Berol, Duomeen, Ethomeen (Akzo), Ethylan, (Akcros) erhältlich.

Als Beispiele für weitere in Komponente (D) enthaltenen besonders geeigneten wasserlöslichen anionischen oberflächenaktiven Mittel seien Additive auf Basis von Polymerisaten ethylenisch ungesättigter Carbonsäuren, Additive auf Basis von Polyurethanen und Additive auf Basis von Polykondensationsprodukten von aromatischen Sulfonsäuren und Formaldehyd genannt.

Selbstverständlich können auch Mischungen mehrerer Additive in der Komponente (D) verwendet werden, also sowohl Mischungen verschiedener nichtionischer Additive als auch Mischungen verschiedener anionischer Additive sowie Mischungen von nichtionischen und anionischen Additiven.

Als anionische wasserlösliche oberflächenaktive Additive auf der Basis von Polymerisaten ungesättigter Carbonsäuren eignen sich insbesondere Additive aus der Gruppe der Homo- und Copolymerisate von ethylenisch ungesättigten Monocarbonsäuren und/oder ethylenisch ungesättigten Dicarbonsäuren, die keine Säurefunktion enthaltende Vinylmonomere zusätzlich einpolymerisiert enthalten können, der Alkoxylierungsprodukte dieser Homo- und Copolymerisate und der Salze dieser Homo- und Copolymerisate und ihrer Alkoxylierungsprodukte.

Als Beispiele für die carboxylgruppenhaltigen Monomere und die Vinylmonomere seien genannt:
- Acrylsäure, Methacrylsäure und Crotonsäure;
- Maleinsäure, Maleinsäureanhydrid, Maleinsäuremonoester, Maleinsäuremonoamide, Umsetzungsprodukte von Maleinsäure mit Diaminen, die zu aminoxidgruppenhaltigen Derivaten oxidiert sein können, und Fumarsäure, wobei Maleinsäure, Maleinsäureanhydrid und Maleinsäuremonoamide bevorzugt sind;
- Vinylaromaten, wie Styrol, Methylstyrol und Vinyltoluol; Ethylen, Propylen, Isobuten, Diisobuten und Butadien; Vinylether, wie Polyethylenglykolmonovinylether;
- Vinylester linearer oder verzweigter Monocarbonsäuren, wie Vinylacetat und Vinylpropionat; Alkylester und Arylester ethylenisch ungesättigter Monocarbonsäuren, insbesondere Acrylsäure- und Methacrylsäureester, wie Methyl-, Ethyl-, Propyl-, Isopropyl-, Butyl-, Pentyl-, Hexyl-, 2-Ethylhexyl-, Nonyl-, Lauryl- und Hydroxyethyl-(meth)acrylat sowie Phenyl-, Naphthyl- und Benzyl(meth)acrylat; Dialkylester von ethylenisch ungesättigten Dicarbonsäuren, wie Dimethyl-, Diethyl-, Dipropyl-, Diisopropyl-, Dibutyl-, Dipentyl-, Dihexyl-, Di-2-ethylhexyl-, Dinonyl-, Dilauryl- und Di-2-hydroxyethylmaleinat und -fumarat; Vinylpyrrolidon; Acrylnitril und Methacrylnitril, wobei Styrol, Isobuten, Diisobuten, Acrylsäureester und Polyethylenglykolmonovinylether bevorzugt sind.

Als Beispiele für bevorzugte Homopolymerisate dieser Monomere sind insbesondere Polyacrylsäuren zu nennen.

Die Copolymerisate der genannten Monomere können aus zwei oder mehreren, insbesondere drei verschiedenen Monomeren aufgebaut sein. Es können statistische Copolymerisate, alternierende Copolymerisate, Blockcopolymerisate und Pfropfcopolymerisate vorliegen. Als bevorzugte Copolymerisate seien Styrol/Acrylsäure-, Acrylsäure/- Maleinsäure-, Acrylsäure/Methacrylsäure-, Butadien/Acrylsäure-, Isobuten/Maleinsäure-, Diisobuten/Maleinsäure- und Styrol/Maleinsäure-Copolymerisate, die jeweils als zusätzliche Monomerbestandteile Acrylsäureester und/oder Maleinsäureester enthalten können, genannt.

Vorzugsweise liegen die Carboxylgruppen der nicht alkoxylierten Homo- und Copolymerisate zumindest teilweise in Salzform vor, um Wasserlöslichkeit zu gewährleisten. Geeignet sind beispielsweise die Alkalimetallsalze, wie Natrium- und Kaliumsalze, und die Ammoniumsalze.

Üblicherweise weisen die nicht alkoxylierten polymeren Additive mittlere Molekulargewichte M_{w} von 900 bis 250 000 auf. Die für die einzelnen Polymerisate besonders geeigneten Molekulargewichtsbereiche hängen naturgemäß von deren Zusammensetzung ab. Im Folgenden werden für verschiedene Polymerisate beispielhaft Molekulargewichtsangaben gemacht: Polyacrylsäuren: M_{w} von 900 bis 250 000; Styrol/Acrylsäure-Copolymerisate: M_{w} von 1 000 bis 50 000; Acrylsäure/Methacrylsäure-Copolymerisate: M_{w} von 1 000 bis 250 000; Acrylsäure/Maleinsäure-Copolymerisate: M_{w} von 2 000 bis 70 000.

Neben diesen Homo- und Copolymerisaten selbst sind auch ihre Alkoxylierungsprodukte als Additive von besonderem Interesse.

Hierbei handelt es sich vor allem um die teilweise bis (soweit dies möglich ist) vollständig mit Polyetheralkoholen veresterten Polymerisate. In der Regel beträgt der Veresterungsgrad dieser Polymerisate 30 bis 80 Mol-%.

Für die Veresterung geeignet sind insbesondere Alkohole wie Ethanol, Propanol, Isopropanol, Butanol, Fettalkohole, die Polyetheralkohole selbst, vorzugsweise Polyethylenglykole und Polypropylenglykole, sowie deren einseitig endgruppenverschlossene Derivate, vor allem die entsprechenden Monoether, wie Monoarylether, z.B. Monophenylether, und insbesondere Mono-C₁-C₂₆-alkylether, z.B. mit Fettalkoholen veretherte Ethylen- und Propylenglykole, und die Polyetheramine, die z.B. durch Umwandlung einer terminalen OH-Gruppe der entsprechenden Polyetheralkohole oder durch Polyaddition von Alkylenoxiden an vorzugsweise primäre aliphatische Amine herstellbar sind. Bevorzugt sind dabei Polyethylenglykole, Polyethylenglykolmonoether und Polyetheramine. Die mittleren Molekulargewichte Mₙ der verwendeten Polyetheralkohole und ihrer Derivate liegen üblicherweise bei 200 bis 10 000.

Durch Steuerung des Verhältnisses von polaren zu unpolaren Gruppen können die oberflächenaktiven Eigenschaften der Additive gezielt eingestellt werden.

Derartige anionische oberflächenaktive Additive sind ebenfalls bekannt und im Handel z.B. unter den Namen Sokalan^{®} (BASF), Joncryl^{®} (Johnson Polymer), Alcosperse^{®} (Alco), Geropon^{®} (Rhodia), Good-Rite^{®} (Goodrich), Neoresin^{®} (Avecia), Orotan^{®} und Morez^{®} (Rohm & Haas), Disperbyk^{®} (Byk) sowie Tegospers^{®} (Degussa) erhältlich.

Als anionische oberflächenaktive Additive können in Komponente (D) weiterhin Additive auf Polyurethanbasis enthalten sein.

Der Begriff Polyurethan umfasst dabei nicht nur die reinen Umsetzungsprodukte von mehrwertigen Isocyanaten mit isocyanatreaktive Hydroxygruppen enthaltenden organischen Verbindungen, sondern auch solche Umsetzungsprodukte, die durch den Zusatz von weiteren isocyanatreaktiven Verbindungen, z.B. von primäre oder sekundäre Aminogruppen tragenden Carbonsäuren, zusätzlich funktionalisiert sind.

Diese Additive zeichnen sich gegenüber anderen oberflächenaktiven Additiven durch ihre geringe Ionenleitfähigkeit und ihren neutralen pH-Wert aus.

Als mehrwertige Isocyanate für die Herstellung dieser Additive eignen sich insbesondere Diisocyanate, es können aber auch Verbindungen mit drei oder vier Isocyanatgruppen eingesetzt werden. Es können sowohl aromatische als auch aliphatische Isocyanate verwendet werden.

Als Beispiele für bevorzugte Di- und Triisocyanate seien aufgeführt: 2,4-Toluylendiisocyanat (2,4-TDI), 4,4'-Diphenylmethandiisocyanat (4,4'-MDI), para-Xylylendüsocyanat, 1,4-Diisocyanatobenzol, Tetramethylxylylendiisocyanat (TMXDI), 2,4'-Diphenylmethandiisocyanat (2,4'-MDI) und Triisocyanatotoluol sowie Isophorondiisocyanat (IPDI), 2-Butyl-2-ethylpentamethylendiisocyanat, Tetramethylendiisocyanat, Hexamethylendiisocyanat, Dodecamethylendiisocyanat, 2,2-Bis(4-isocyanatocyclohexyl)propan, Trimethylhexandiisocyanat, 2-Isocyanatopropylcyclohexylisocyanat, 2,4,4- und 2,2,4Trimethylhexamethylendiisocyanat, 2,4'-Methylenbis(cyclohexyl)diisocyanat, cis-Cyclohexan-1,4-diisocyanat, trans-Cyclohexan-1,4-diisocyanat und 4-Methylcyclohexan-1,3-diisocyanat (H-TDI).

Selbstverständlich können auch Mischungen von Isocyanaten verwendet werden. Beispielhaft seien hier genannt: Mischungen von Strukturisomeren von 2,4-Toluylendiisocyanat und Triisocyanatotoluol, z.B. Mischungen aus 80 Mol-% 2,4-Toluylendiisocyanat und 20 Mol-% 2,6-Toluylendiisocyanat; Mischungen aus cis- und transCyclohexan-1,4-diisocyanat; Mischungen von 2,4- oder 2,6-Toluylendiisocyanat mit aliphatischen Diisocyanaten, wie Hexamethylendiisocyanat und Isophorondiisocyanat.

Als isocyanatreaktive organische Verbindungen eignen sich bevorzugt Verbindungen mit mindestens zwei isocyanatreaktiven Hydroxygruppen pro Molekül. Geeignet als Verbindung sind jedoch auch Verbindungen, die nur eine isocyanat-reaktive Hydroxygruppe pro Molekül aufweisen. Diese monofunktionalisierten Verbindungen können die mindestens zwei isocyanatreaktive Hydroxygruppen pro Molekül enthaltenden Verbindungen bei der Umsetzung mit dem Polyisocyanat teilweise oder auch ganz ersetzen.

Im Folgenden werden Beispiele für besonders bevorzugte isocyanatreaktive Verbindungen mit mindestens zwei isocyanatreaktiven Hydroxygruppen pro Molekül aufgeführt.

Dabei handelt es sich um Polyetherdiole, Polyesterdiole, Polyesterdiole auf Lactonbasis, Diole und Triole mit bis zu 12 C-Atomen, Dihydroxycarbonsäuren, Dihydroxysulfonsäuren, Dihydroxyphosphonsäuren, Polycarbonatdiole, Polyhydroxyolefine und Polysiloxane mit im Mittel mindestens zwei Hydroxygruppen pro Molekül.

Geeignete Polyetherdiole sind beispielsweise Homo- und Copolymerisate von C₂-C₄Alkylenoxiden, wie Ethylenoxid, Propylenoxid und Butylenoxid, Tetrahydrofuran, Styroloxid und/oder Epichlorhydrin, die in Gegenwart eines geeigneten Katalysators, z.B. Bortrifluorid, erhältlich sind. Weiterhin geeignete Polyetherdiole sind durch (Co)Polymerisation dieser Verbindungen in Gegenwart eines Starters mit mindestens zwei aciden Wasserstoffatomen, z.B. von Wasser, Ethylenglykol, Thioglykol, Mercaptoethanol, 1,3-Propandiol, 1,4-Butandiol, 1,6-Hexandiol, 1,12-Dodecandiol, Ethylendiamin, Anilin oder 1,2-Di-(4-Hydroxyphenyl)propan, zu erhalten.

Beispiele für besonders geeignete Polyetherdiole sind Polyethylenglykol, Polypropylenglykol, Polybutylenglykol und Polytetrahydrofuran sowie Copolymerisate davon.

Das Molekulargewicht Mₙ der Polyetherdiole beträgt bevorzugt 250 bis 5 000, besonders bevorzugt 500 bis 2 500.

Als isocyanatreaktive Verbindung geeignete Polyesterdiole (Hydroxypolyester) sind allgemein bekannt.

Bevorzugte Polyesterdiole sind die Umsetzungsprodukte von Diolen mit Dicarbonsäuren oder deren reaktiven Derivaten, z.B. Anhydriden oder Dimethylestern.

Als Dicarbonsäuren eignen sich gesättigte und ungesättigte aliphatische sowie aromatische Dicarbonsäuren, die zusätzliche Substituenten, wie Halogen, tragen können. Bevorzugte aliphatische Dicarbonsäuren sind gesättigte unverzweigte α,ω-Dicarbonsäuren, die 3 bis 22, vor allem 4 bis 12 C-Atome enthalten.

Beispiele für besonders geeignete Dicarbonsäuren sind: Bernsteinsäure, Glutarsäure, Adipinsäure, Korksäure, Azelainsäure, Sebacinsäure, 1,12-Dodecandicarbonsäure, Maleinsäure, Maleinsäureanhydrid, Fumarsäure, Itaconsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Terephthalsäure, Terephthalsäuredimethylester und Isophthalsäuredimethylester.

Als Diole eignen sich insbesondere gesättigte und ungesättigte aliphatische und cycloaliphatische Diole. Die besonders bevorzugten aliphatischen α,ω-Diole sind unverzweigt und weisen 2 bis 12, insbesondere 2 bis 8, vor allem 2 bis 4 C-Atome auf. Bevorzugte cycloaliphatische Diole leiten sich von Cyclohexan ab.

Beispiele für besonders geeignete Diole sind: Ethylenglykol, Propylenglykol, 1,3-Propandiol, 1,4-Butandiol, 2-Methylpropan-1,3-diol, 1,5-Pentandiol, Neopentylglykol, 1,6-Hexandiol, 1,8-Octandiol, 1,10-Decandiol, 1,12-Dodecandiol, cis- und trans-But-2-en-1,4-diol, 2-Butin-1,4-diol und cis- und trans-1,4-Di(hydroxymethyl)cyclohexan.

Das Molekulargewicht Mₙ der Polyesterdiole liegt bevorzugt bei 300 bis 5 000.

Als isocyanatreaktive Verbindung geeignete Polyesterdiole auf Lactonbasis basieren insbesondere auf aliphatischen gesättigten unverzweigten (ω-Hydroxycarbon-säuren mit 4 bis 22, bevorzugt 4 bis 8 C-Atomen. Es eignen sich auch verzweigte ω-Hydroxycarbonsäuren, bei denen ein oder mehrere -CH₂-Gruppen in der Alkylenkette durch -CH(C₁-C₄-Alkyl)- ersetzt sind.

Beispiele für bevorzugte ω-Hydroxycarbonsäuren sind γ-Hydroxybuttersäure und δ-Hydroxyvaleriansäure.

Selbstverständlich eignen sich auch die oben genannten Diole als isocyanatreaktive Verbindungen, wobei dieselben Bevorzugungen wie oben gelten.

Ebenfalls als isocyanatreaktive Verbindungen geeignet sind Triole, die insbe-sondere 3 bis 12, vor allem 3 bis 8 C-Atome aufweisen. Beispiel für ein besonders geeignetes Triol ist Trimethylolpropan.

Als isocyanatreaktive Verbindungen geeignete Dihydroxycarbonsäuren sind insbesondere aliphatische gesättigte Dihydroxycarbonsäuren, die vorzugsweise 4 bis 14 C-Atome enthalten, besonders geeignet. Ganz besonders geeignet sind Dihydroxycarbonsäuren der Formel 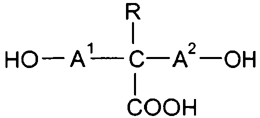 in A¹ und A² gleiche oder verschiedene C₁-C₄-Alkylenreste bedeuten und R für Wasserstoff oder C₁-C₄-Alkyl steht.

Besonders bevorzugtes Beispiel für diese Dihydroxycarbonsäuren ist Dimethylolpropionsäure (DMPA).

Weiterhin eignen sich als isocyanatreaktive Verbindungen die entsprechenden Dihydroxysulfonsäuren und Dihydroxyphosphonsäuren, wie 2,3-Dihydroxypropanphosphonsäure.

Der Begriff Dihydroxycarbonsäure soll dabei auch Verbindungen umfassen, die mehr als eine Carboxylfunktion (bzw. Anhydrid- oder Esterfunktion) enthalten. Solche Verbindungen sind durch Umsetzung von Dihydroxyverbindungen mit Tetracarbonsäuredianhydriden, wie Pyromellitsäuredianhydrid oder Cyclopentantetracarbonsäuredianhydrid, im Molverhältnis 2 : 1 bis 1,05 : 1 in einer Polyadditionsreaktion erhältlich und weisen vorzugsweise ein mittleres Molekulargewicht Mₙ von 500 bis 10 000 auf.

Als Beispiele für geeignete Polycarbonatdiole sind die Umsetzungsprodukte von Phosgen mit einem Überschuss an Diolen, insbesondere unverzweigten gesättigten aliphatischen α,ω-Diolen mit 2 bis 12, insbesondere 2 bis 8, vor allem 2 bis 4 C-Atomen zu nennen.

Als isocyanatreaktive Verbindung geeignete Polyhydroxyolefine sind vor allem α,ω-Dihydroxyolefine, wobei α,ω-Dihydroxybutadiene bevorzugt sind.

Die weiterhin als isocyanatreaktive Verbindung geeigneten Polysiloxane enthalten im Mittel mindestens zwei Hydroxygruppen pro Molekül. Besonders geeignete Polysiloxane weisen im Mittel 5 bis 200 Si-Atome (Zahlenmittel) auf und sind vor allem mit C₁-C₁₂-Alkylgruppen, insbesondere Methylgruppen, substituiert.

Als Beispiele für isocyanatreaktive Verbindungen, die nur eine isocyanatreaktive Hydroxygruppe aufweisen, seien insbesondere aliphatische, cycloaliphatische, araliphatische oder aromatische Monohydroxycarbonsäuren und -sulfonsäuren genannt.

Es ist möglich, neben den vorstehend genannten isocyanatreaktiven Verbindungen weitere Verbindungen mit isocyanatreaktiven Gruppen zuzusetzen, beispielsweise Dithiole, Thioalkohole, wie Thioethanol, Aminoalkohole, wie Ethanolamin und N-Methylethanolamin, oder Diamine, wie Ethylendiamin, und dadurch Polyurethane herzustellen, die neben den Urethangruppen noch Isocyanuratgruppen, Allophanatgruppen, Harnstoffgruppen, Biuretgruppen, Uretdiongruppen oder Carbodiimidgruppen tragen. Weitere Beispiele für solche isocyanatreaktiven Verbindungen sind aliphatische, cycloaliphatische, araliphatische oder aromatische Carbonsäuren und Sulfonsäuren, die mindestens zwei primäre und/oder sekundäre Aminogruppen tragen.

Selbstverständlich können auch entsprechende nur eine isocyanatreaktive Gruppe aufweisende Verbindungen, beispielsweise Monoalkohole, primäre und sekundäre Monoamine, Monoaminocarbon- und -sulfonsäuren und Mercaptane, zugesetzt werden.

Vorzugsweise liegen die Carboxylgruppen der Umsetzungsprodukte zumindest teilweise in Salzform vor, um Wasserlöslichkeit zu gewährleisten. Geeignet sind beispielsweise Alkalimetallsalze, wie Natrium- und Kaliumsalze, und Ammoniumsalze.

Üblicherweise weisen die Additive mittlere Molekulargewichte M_{w} von 500 bis 250 000 auf.

Durch Steuerung des Verhältnisses von polaren zu unpolaren Gruppen können die oberflächenaktiven Eigenschaften der Additive gezielt eingestellt werden.

Derartige anionische oberflächenaktive Additive sind bekannt und im Handel z.B. unter den Namen Borchi^{®} GEN SN95 (Borchers) erhältlich.

Darüber hinaus können auch weitere Additive vorhanden sein.

Zusätzlich können noch geringe Menge an Entschäumern (vorzugsweise 0,01 Gew.-% bis 0,2 Gew.-% -sofern vorhanden- bezogen auf das Gesamtgewicht der Zusammensetzung beispielsweise der Firmen Tego, Byk, Borchers) und Bioziden (vorzugsweise 0,01 Gew.-% bis 0,5 Gew.-% -sofern vorhanden- bezogen auf das Gesamtgewicht der Zusammensetzung beispielsweise der Firmen Thor, Rohm & Haas) in der Komponente enthalten sein. Weiterhin können noch Verdicker (vorzugsweise 0,01 Gew.-% bis 2 Gew.-% -sofern vorhanden- bezogen auf das Gesamtgewicht der Zusammensetzung beispielsweise der Firmen Coatex, BASF, Tego, Aqualon) eingesetzt werden.

Weiterhin enthält die erfindungsgemäße wässrige Pigmentzusammensetzung eine Lösemittelkomponente (E), die zumindest Wasser enthält. Die Lösemittelkomponente kann aus weiteren Lösemitteln bestehen, wobei bevorzugt ist, dass diese mit Wasser in der erfindungsgemäßen Zusammensetzung zumindest teilweise mischbar sind. Der Anteil der Komponente (E) in der erfindungsgemäßen wässrigen Pigmentzusammensetzung bezogen auf das Gesamtgewicht der Zusammensetzung beträgt 1 Gew.-% bis 89,8 Gew.-%. Vorzugsweise beträgt der Anteil der Komponente (E) 10 Gew.-% bis 89,8 Gew.-%.

Beispiele für weitere Lösemittel sind insbesondere Alkohole, Diole, Triole sowie Polyole, die teilalkoxyliert sein können. Beispiele hierfür sind 2-Ethylhexanol, 2-Butoxyethanol, Dipropylenglykolmonomethylether, Ethylenglykol, n-Propylalkohol, Isopropylalkohol, Propylenglykol und Butylenglykol. Insbesondere sind zu erwähnen Diethylenglykol, Dipropylenglykol, und Dibutylenglycol, Polyethylenglykole mit einem Molekulargewicht von 200-1000 g/mol sowie Texanol bzw. Texanol-Esteralkohole, wobei diese Lösemittel gleichzeitig als Filmbindemitttel (Koaleszenzmittel) und auch als Wasserrückhaltemittel (Retentionsmittel) eingesetzt werden können. Im Rahmen der vorliegenden Erfindung werden diese Stoffe jedoch als Bestandteil der Lösemittelkomponente betrachtet.

Die universell einsetzbare erfindungsgemäß wässrige Pigmentzusammensetzung liegt in pastöser Form vor.

Ihr Pigmentanteil beträgt daher 10 Gew.-% bis 70 Gew.-% bezogen auf das Gesamtgewicht der erfindungsgemäßen Zusammensetzung.

Weiterhin ist bevorzugt, dass die erfindungsgemäß wässrige Pigmentzusammensetzung fließfähig und pumpbar ist.

Ein weiterer Gegenstand der vorliegenden Erfindung ist ein Verfahren zum Herstellen einer erfindungsgemäßen Zusammensetzung die Schritte enthaltend
(a) Zusammengeben der Komponenten (A) und gegebenenfalls zumindest teilweise der Komponenten (B) bis (D) in zumindest einen Teil der Komponenten (E);
(b) Nasszerkleinerung der entstehenden Suspension und
(c) gegebenenfalls Zugeben der Komponenten (B) bis (D) bzw. restliches Zugeben der Komponenten (B) bis (E).

Hierbei ist es besonders bevorzugt, dass die Komponente (C) erst vollständig in Schritt (c) zugegeben wird.

Die erfindungsgemäße wässrige Pigmentzusammensetzung kann zur Pigmentierung von flüssigen Systemen verwendet werden.

Bei diesen flüssigen Systemen handelt es sich vorzugsweise um Anstrichmittel, Lacke, Dispersions- und Druckfarben. Bevorzugt sind hierbei wasserbasierte Dispersionsfarben, insbesondere auf Basis Styrol/Acrylat; Alkyd-Melamin-Einbrennlacke; Alkydlacke, insbesondere aromatenarme und/oder lufttrocknende Lacke, Acrylat-Isocyanat-Lacke; Alkydharz-Holzschutzlasuren; insbesondere aromatenarme Lasuren und wässrige Polyurethan/Acrylat-Holzschutzlasuren.

### Beispiele

### Beispiel 1 Erfindungsgemäße Zusammensetzungen

Es werden Zusammensetzungen ZS-1 bis ZS-5 mit den in der Tabelle angegebenen Bestandteilen (in Gew.-%) nach konventioneller Methode hergestellt.

| Chemische Natur der Komponente | ZS-1 | ZS-2 | ZS-3 | ZS-4 | ZS-5 | Handelname/ Kurzbezeichnung |
|---|---|---|---|---|---|---|
| Transparentes Eisenoxid (A) | 34,50 | | | | | Sicotrans Rot L 2817 |
| Transparentes Eisenoxid (A) | | 34,50 | | | | Sicotrans Gelb L 1916 |
| P.BI. 7 | | | 20,0 | | | Ruß |
| P.B. 15:3 | | | | 30,0 | | Heliogen Blau L 7080 |
| P.Y. 74 | | | | | 30,0 | Sicoecht Gelb 1252 |
| Triethylenglycol (E) | 5,00 | 5,00 | 5,0 | 5,0 | 5,0 | TEG |
| AlkylalkylenoxidPhosphatester (B) | 11,00 | 10,2 | 7,5 | 7,5 | 7,5 | |
| Acetylendiol (C) | 3,00 | 2,00 | 0,5 | 0,5 | 0,5 | Surfynol 104 |
| Lecithin hydrophob (B) | 7,50 | 5,00 | 5,0 | 5,0 | 5,0 | Soja Lecithin |
| Wasser (E) | 38,50 | 42,8 | 62,0 | 52 | 52 | VE - Wasser |
| Pigmentsynergist (A) | 0,50 | 0,50 | 0 | 0 | 0 | Chinophtalonsulfonsäure Ia |
| | 100 | 100 | 100 | 100 | 100 | |

### Beispiel 2 Beurteilung der Koloristik und der Viskosität der erfindungsgemäßen Zusammensetzungen (Pasten)

Folgende Farben werden geprüft:
1. **Wasserbasierende Dispersionsfarbe auf Basis Styrol/Acrylatbasis** mit einem Weißpigmentgehalt von 16,4 Gew.% (TiO₂, Kronos 2043) (Prüfbinder 00-1067, BASF).
2. **Alkyd-Melamin-Einbrennlack** (56 Gew.% Feststoffanteil, Xylol/Butanol als Lösemittel)
   Weißaufhellung mit Weißpigmentgehalt von 27,0 Gew.% (TiO₂, Kronos 2059) 40% Bindemittel (Prüfbinder EL 2, BASF).
3. **Alkyd-Melamin-Einbrennlack** (35 Gew.% Feststoffanteil, Xylol als Lösemittel), Weißaufhellung mit Weißpigmentgehalt von 20,0 Gew.-% (TiO₂, Kronos 2059) (Prüfbinder EPL, BASF)
4. Handelsüblicher **aromatenarmer luftrocknender Alkydlylack** (Fa. Akzo, Rubbol).
   Aromatenarme Alkydlacke enthalten überwiegend aliphatische Kohlenwasserstoffe (Hydriertes Naphta, Paraffin) und nur geringe Anteile an aromatischen Lösemitteln (<5% in Farbe).
5. **Luftrocknender Alkydlack** (45 Gew.% Feststoffanteil, Xylol als Lösemittel, BASF-Prüflack AF 485). Weißaufhellung mit Weißpigmentgehalt von 25,6% TiO₂ Kronos 2059,
6. **Acrylat-Isocyanat-Lack (2K)** (40 Gew.-% Feststoffanteil mit Xylol / Methoxypropylacetat als Lösemittel.
   Weißaufhellung mit 21% TiO₂-Gehalt.
7. Handelsübliche lufttrocknende **aromatenarme Alkydharz-Holzschutzlasur** Lösemittel: Isoparaffine, Hydriertes Naphta.

### Prüfung:

In einem 150 ml-Kunststoffbecher werden eine Mischung von 3,5 g Pigmentpaste und 50 g Farbe (Buntlack für Purtonbeurteilung bzw. Weißlack zur Farbstärkebeurteilung) mit einem Schnellrührer 3 min bei 1500 U/min homogenisiert. Die erhaltene Farbe wird dann mit einer 150 µm-Spiralrakel auf schwarz/weißen Prüfkarton aufgezogen und 30 min getrocknet. Die Einbrennlacke (EPL, EL2) werden zusätzlich 30 min bei 130°C im Trockenschrank eingebrannt

Geprüft werden die Farbstärke in der Weißaufhellung (Angabe der Färbeäquivalente FAE, DIN 55986), die Transparenz im Vollton und die Zahl der Stippen.

Die erfindungsgemäßen Pigmentpasten sind ohne Rub-out und Stippenfrei in den einzelnen Farben dispergierbar. Die Farbstärke ist vergleichbar mit den entsprechenden wässrigen bzw. lösemittelhaltigen Pasten.

Zur Prüfung der Lagerstabilität werden die Pasten 7 Tage bei 50°C im Trockenschrank gelagert.

Bei allen erfindungsgemäßen Pasten ZS-1 bis ZS-5 treten keine nennenswerten Viskositätsänderungen auf. Somit sind diese universell für wässrige und organische (sowohl aliphatische als auch aromatische) Systeme einsetzbar.

## Patentansprüche

1. Wässrige Pigmentzusammensetzung enthaltend jeweils auf das Gesamtgewicht der Zusammensetzung bezogen
(A) 10 Gew.-% bis 70 Gew.-% einer farbgebenden Komponente enthaltend mindestens ein Farbpigment und gegebenenfalls mindestens einen Füllstoff;
(B) 0,1 Gew.-% bis 30 Gew.-% einer oberflächenaktiven Additivkomponente auf Basis zumindest eines Phosphorsäure- oder Phosphonsäureester, die sowohl anionisch als auch nichtionisch sein können;
(C) 0,1 Gew.-% bis 10 Gew.-% einer nichtionischen oberflächenaktiven Additivkomponente auf Basis zumindest eines hydroxylgruppenhaltigen Acetylens oder Acetylenalkoxylates;
(D) 0 Gew.-% bis 20 Gew.-% einer Additivkomponente enthaltend Additive verschieden von (B) und (C);
(E) 1 Gew.-% bis 89,8 Gew.-% einer Lösemittelkomponente zumindest Wasser enthaltend,
wobei die Zusammensetzung als Paste vorliegt.

2. Zusammensetzung nach Anspruch 1, **dadurch gekennzeichnet, dass** die Komponente (A) einen Pigmentsynergisten enthält.

3. Zusammensetzung nach Anspruch 1 oder 2, **dadurch gekennzeichnet, dass** die Komponente (A) mindestens ein anorganisches Pigment enthält.

4. Zusammensetzung nach einem der Ansprüche 1 bis 3, **dadurch gekennzeichnet, dass** die Komponente (B) mindestens einen Phosphorsäureester enthält.

5. Zusammensetzung nach einem der Ansprüche 1 bis 4, **dadurch gekennzeichnet, dass** die Komponente (C) mindestens ein Acetylendiol bzw. mindestens ein Acetylenalkoxylatdiol enthält.

6. Zusammensetzung nach einem der Ansprüche 1 bis 5, **dadurch gekennzeichnet, dass** die Komponente (D) weitere von (B) und (C) verschiedene oberflächenaktive Additive enthält.

7. Verfahren zum Herstellen einer Zusammensetzung nach einem der Ansprüche 1 bis 6 die Schritte enthaltend
(a) Zusammengeben der Komponenten (A) und gegebenenfalls zumindest teilweise der Komponenten (B) bis (D) in zumindest einen Teil der Komponenten (E);
(b) Nasszerkleinerung der entstehenden Suspension und
(c) gegebenenfalls Zugeben der Komponenten (B) bis (D) bzw. restliches Zugeben der Komponenten (B) bis (E).

8. Verfahren nach Anspruch 7, **dadurch gekennzeichnet, dass** die Komponente (C) erst in Schritt (c) zugegeben wird.

9. Verwendung einer Zusammensetzung nach einem der Ansprüche 1 bis 6 zur Pigmentierung von flüssigen Systemen.

## Claims

1. An aqueous pigment composition comprising - based in each case on the total weight of the composition -
(A) 10% to 70% by weight of a coloring component comprising at least one color pigment and optionally at least one filler;
(B) 0.1% to 30% by weight of a surface-active additive component based on at least one phosphoric or phosphonic ester, which may be anionic or nonionic;
(C) 0.1% to 10% by weight of a nonionic, surface-active additive component based on at least one hydroxyl-containing acetylene or acetylene alkoxylate;
(D) 0% to 20% by weight of an additive component comprising additives different than (B) and (C);
(E) 1% to 89.8% by weight of a solvent component at least comprising water,
the composition being present in the form of a paste.

2. The composition according to claim 1, wherein component (A) comprises a pigment synergist.

3. The composition according to claim 1 or 2, wherein component (A) comprises at least one inorganic pigment.

4. The composition according to any of claims 1 to 3, wherein component (B) comprises at least one phosphoric ester.

5. The composition according to any of claims 1 to 4, wherein component (C) comprises at least one acetylenediol and/or at least one acetylene alkoxylate diol.

6. The composition according to any of claims 1 to 5, wherein component (D) comprises further surface-active additives different than (B) and (C).

7. A process for preparing a composition according to any of claims 1 to 6, comprising the steps of
(a) combining component (A) and, optionally, at least some of components (B) to (D) in at least one part of component (E);
(b) wet-comminuting the resulting suspension; and
(c) optionally, adding components (B) to (D) and/or the rest of components (B) to (E).

8. The process according to claim 7, wherein component (C) is added not until step (c).

9. The use of a composition according to any of claims 1 to 6 to pigment liquid systems.

## Revendications

1. Composition aqueuse, pigmentaire contenant à chaque fois, par rapport au poids total de la composition
(A) 10% en poids à 70% en poids d'un composant colorant contenant au moins un pigment coloré et le cas échéant au moins une charge ;
(B) 0,1% en poids à 30% en poids d'un composant de type additif tensioactif à base d'au moins un ester d'acide phosphorique ou phosphonique, qui peut être tant anionique que non ionique ;
(C) 0,1% en poids à 10% en poids d'un composant de type additif tensioactif non ionique à base d'au moins un acétylène ou alcoxylate d'acétylène contenant des groupes hydroxyle ;
(D) 0% en poids à 20% en poids d'un composant de type additif contenant des additifs différents de (B) et (C) ;
(E) 1% en poids à 89,8% en poids d'un composant solvant contenant au moins de l'eau,
la composition se trouvant sous forme de pâte.

2. Composition selon la revendication 1, **caractérisée en ce que** le composant (A) contient un synergiste pigmentaire.

3. Composition selon la revendication 1 ou 2, **caractérisée en ce que** le composant (A) contient au moins un pigment inorganique.

4. Composition selon l'une quelconque des revendications 1 à 3, **caractérisée en ce que** le composant (B) contient au moins un ester d'acide phosphorique.

5. Composition selon l'une quelconque des revendications 1 à 4, **caractérisée en ce que** le composant (C) contient au moins un acétylènediol ou, selon le cas, au moins un (alcoxylate d'acétylène)diol.

6. Composition selon l'une quelconque des revendications 1 à 5, **caractérisée en ce que** le composant (D) contient d'autres additifs tensioactifs différents de (B) et de (C).

7. Procédé pour la préparation d'une composition selon l'une quelconque des revendications 1 à 6, comprenant les étapes
(a) mélange du composant (A) et le cas échant au moins d'une partie des composants (B) à (D) dans au moins une partie du composant (E) ;
(b) broyage humide de la suspension formée et
(c) le cas échéant addition des composants (B) à (D) ou, selon le cas, addition des restes des composants (B) à (E).

8. Procédé selon la revendication 7, **caractérisé en ce que** le composant (C) n'est ajouté que dans l'étape (c).

9. Utilisation d'une composition selon l'une quelconque des revendications 1 à 6 pour la pigmentation de systèmes liquides.
